# FASCICULE DE BREVET EUROPEEN

(11) **EP 4 009 119 B1**
(45) Date de publication et mention de la délivrance du brevet: **05.07.2023**
(21) Numéro de dépôt: 21208529.4
(22) Date de dépôt: 16.11.2021
(51) Int. Cl.: G04C 10/00, G04C 11/08

(54) **MOUVEMENT HORLOGER MUNI D'UNE GENERATRICE ET D'UN CIRCUIT DE REGULATION DE LA FREQUENCE DE ROTATION DE CETTE GENERATRICE**
UHRWERK, DAS EINEN GENERATOR UND EINE SCHALTUNG ZUR REGULIERUNG DER DREHFREQUENZ DIESES GENERATORS UMFASST
TIMEPIECE MOVEMENT PROVIDED WITH A GENERATOR AND A CIRCUIT FOR CONTROLLING THE FREQUENCY OF ROTATION OF SAID GENERATOR

(30) Priorité: 07.12.2020 EP 20212293
(43) Date de publication de la demande: 08.06.2022
(73) Titulaire: The Swatch Group Research and Development Ltd, 2074 Marin (CH)
(72) Inventeur: BORN, Jean-Jacques, 1110 Morges (CH); SAUVAIN, Philippe, 1373 Chavornay (CH); PERRIER, Stéphane, 38190 Bernin (FR); MATTHEY, Olivier, 1453 Mauborget (CH)
(74) Mandataire: ICB SA

(56) Documents cités:
- EP-A1- 0 806 710
- EP-A1- 1 063 573
- EP-A1- 3 620 867
- EP-A2- 0 905 588

## Description

### Domaine technique

L'invention concerne le domaine des mouvements horlogers qui sont munis d'une génératrice et d'un circuit de régulation de la fréquence de rotation de cette génératrice.

Plus particulièrement, l'invention concerne un mouvement horloger comprenant un barillet, un mécanisme d'affichage analogique de l'heure entraîné par au moins un barillet et un module régulateur de la marche du mécanisme d'affichage analogique. Le module régulateur comprend une génératrice à rotation continue et un circuit de régulation de la vitesse angulaire ou, de manière équivalente, de la fréquence de rotation de cette génératrice, c'est-à-dire de son rotor. Plus précisément, le circuit de régulation est agencé pour pouvoir réguler la fréquence moyenne de rotation du rotor, lequel est aussi entraîné par ledit au moins un barillet et lié cinématiquement au mécanisme d'affichage analogique pour que le module régulateur puisse en réguler la marche. De plus, la génératrice est prévue comme source d'énergie électrique pour un circuit d'alimentation du circuit de régulation.

### Arrière-plan technologique

Un mouvement horloger du type mentionné dans le domaine technique est décrit dans le document EP 935 177, lequel fait référence au document CH 686 332. Comme indiqué dans ce document, tant que le barillet prévu pour entraîner le mouvement horloger, à savoir au moins le mécanisme d'affichage de l'heure et la génératrice, présente un taux d'armage correspondant à une plage de fonctionnement normal de ce mouvement horloger (y compris les indicateurs associés à celui-ci), la génératrice tourne trop vite en l'absence de freinage, c'est-à-dire que son rotor tourne librement avec une vitesse supérieure à une vitesse de consigne ou, de manière équivalente, avec une fréquence supérieure à une fréquence de consigne. Le circuit de régulation est associé à un oscillateur à quartz qui permet de déterminer la fréquence de consigne avec une précision propre à l'oscillateur à quartz. Le circuit de régulation comprend un circuit de mesure permettant de mesurer la rotation du rotor au cours du temps et ainsi de détecter une dérive de la fréquence de rotation moyenne de la génératrice relativement à la fréquence de consigne déterminée par l'oscillateur à quartz. Ensuite, le circuit de régulation est agencé pour pouvoir engendrer des impulsions de freinage du rotor en diminuant momentanément l'impédance aux bornes d'au moins une bobine de la génératrice de sorte à freiner le rotor, lorsque la dérive de la fréquence de rotation moyenne est supérieure à une valeur positive donnée, pour corriger cette dérive. De plus, le circuit de régulation est agencé pour pouvoir détecter les passages par zéro d'une tension induite alternative générée dans ladite au moins une bobine par le rotor tournant et engendrer des impulsions de freinage qui sont déclenchées respectivement suite à la détection de passages par zéro de cette tension induite alternative (par la suite 'tension induite').

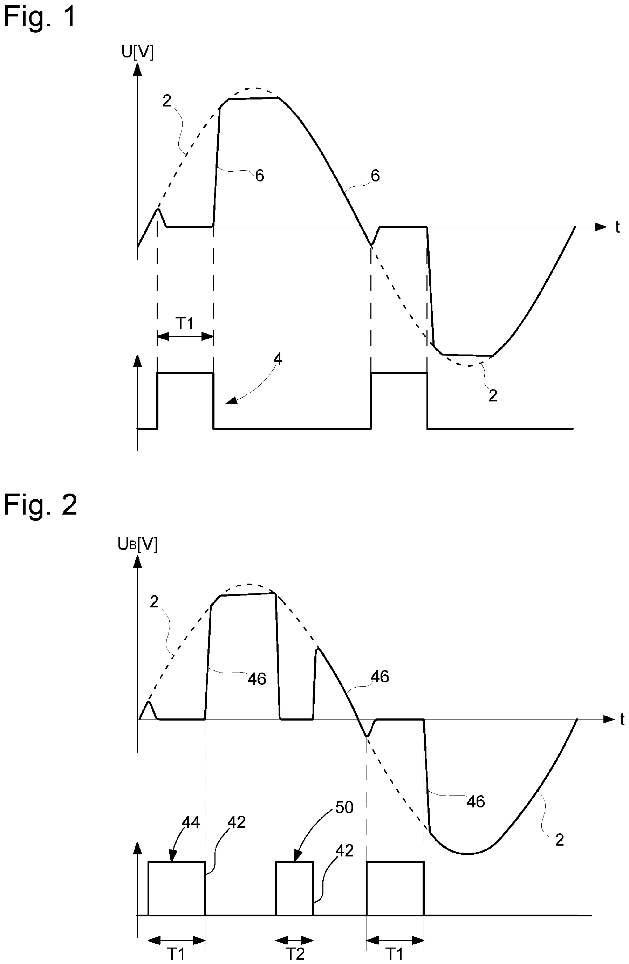

La Figure 1 montre un graphe de la tension induite aux deux bornes d'un stator d'une génératrice du type considéré ici. La courbe sinusoïdale 2 (partiellement en traits interrompus) correspond à la tension induite aux bornes du stator, formé d'au moins une bobine, lorsque le rotor à aimants permanents de la génératrice tourne sensiblement avec la vitesse angulaire de consigne. Le signal digital 4 représente le signal de commande d'un interrupteur agencé entre les bornes du stator, l'état '1' indiquant une fermeture de l'interrupteur (interrupteur passant) qui engendre un court-circuit de ladite au moins une bobine. Chaque court-circuit a pour conséquence que la tension aux bornes du stator, représentée par la courbe 6, tombe sensiblement à zéro. Chaque fermeture momentanée de l'interrupteur engendre une impulsion de freinage de la génératrice permettant de limiter sa vitesse de rotation pour pouvoir la maintenir en moyenne à une vitesse angulaire de consigne.

Comme on peut le voir à la Figure 1, chaque impulsion de freinage est déclenchée rapidement suite à la détection d'un passage par zéro de la tension induite et la durée de chaque impulsion de freinage est prévue de sorte qu'elle se termine bien avant que la tension induite atteigne une valeur de crête suite au passage par zéro ayant servi au déclenchement de cette impulsion de freinage. De préférence, la durée de chaque impulsion de freinage est prévue de sorte qu'elle se termine avant que la tension induite redressée atteigne la valeur d'une tension d'alimentation prévue pour une capacité d'alimentation rechargée par la génératrice. Chaque impulsion de freinage a ainsi une durée maximale T1 permettant d'assurer que la génératrice puisse, en fonctionnement normal du mouvement horloger, remplir sa fonction de source d'énergie électrique pour le module de régulation et recharger à cet effet une capacité d'alimentation dans chaque demi-période du signal de tension induite. Ainsi, une seule impulsion de freinage avec une durée limitée, par exemple au maximum un sixième d'une période T0 de ce signal (T1 =T0/6), est prévue dans chaque demi-période du signal de la tension induite suite au passage par zéro du signal de tension induite. Bien que des impulsions de freinage peuvent être appliquées à la génératrice avec une fréquence égale au double de celle du signal de tension induite, la puissance de freinage est cependant limitée. Ce fait a pour conséquence que la plage de fonctionnement normal du mouvement horloger est limitée, car le couple de force appliqué continûment à la génératrice doit être limité pour que la partie utile de la puissance mécanique d'entraînement de cette génératrice (la partie utile étant celle disponible à l'accélération du rotor) reste inférieure à la puissance de freinage maximale. Comme le mouvement horloger est généralement muni d'une source d'énergie mécanique interne, à savoir qu'il comprend un ou plusieurs barillet(s), une puissance de freinage limitée a pour conséquence une réserve de marche limitée.

On connaît également les documents EP1063573A1 et EP0905588A2 lesquels décrivent des mouvements horlogers selon le préambule de la revendication 1 annexée.

### Résumé de l'invention

La présente invention a pour but de pallier le problème susmentionné en proposant un mouvement horloger du type décrit ci-avant qui permette une plage de fonctionnement plus étendue pour le couple de force pouvant être fourni par le ou les barillet(s) et ainsi une plus grande réserve de marche.

A cet effet, l'invention concerne un mouvement horloger comprenant un barillet, un mécanisme d'affichage analogique de l'heure et un module régulateur de la marche du mécanisme d'affichage analogique comprenant une génératrice à rotation continue et un circuit de régulation, la génératrice étant formée d'un rotor à aimants permanents entrainé en rotation par le barillet et comprenant au moins une bobine, formant un stator, qui est reliée au circuit de régulation, lequel est agencé pour pouvoir réguler la fréquence moyenne de rotation du rotor. Ensuite, le mouvement horloger comprend un circuit d'alimentation relié à ladite bobine et prévu pour alimenter le circuit de régulation, ce circuit d'alimentation comprenant un redresseur pour redresser la tension induite alternative et une capacité d'alimentation qui est rechargée, par la tension induite via le redresseur, durant des périodes de charge au cours de chacune desquelles ladite tension induite atteint une valeur de crête. De plus, le circuit de régulation est agencé pour pouvoir mesurer la rotation du rotor au cours du temps et ainsi détecter une dérive de la fréquence de rotation moyenne de la génératrice relativement à une fréquence de consigne, déterminée par un oscillateur électronique associé au circuit de régulation, et/ou une variation de la fréquence de rotation, et pour pouvoir engendrer des impulsions de freinage du rotor en diminuant momentanément l'impédance aux bornes de ladite au moins une bobine, de sorte à freiner le rotor en fonction de ladite dérive et/ou de ladite variation pour réguler la vitesse de rotation de la génératrice et ainsi la marche du mécanisme d'affichage analogique. Le circuit de régulation est agencé pour pouvoir détecter les passages par zéro d'une tension induite alternative générée dans ladite au moins une bobine par le rotor tournant et engendrer des premières impulsions de freinage qui sont chacune déclenchées suite à une détection d'un passage par zéro de la tension induite, la durée de chaque première impulsion de freinage étant prévue de sorte qu'elle se termine avant que la tension induite alternative atteigne la valeur de crête suivant le passage par zéro ayant servi au déclenchement de cette première impulsion de freinage. Selon l'invention, le circuit de régulation est agencé de manière à pouvoir engendrer en outre des deuxièmes impulsions de freinage qui sont chacune déclenchées suite à une détection de la fin d'une des périodes de charge de la capacité d'alimentation et qui ont chacune une durée prévue pour que chaque deuxième impulsion de freinage se termine avant que la tension induite alternative passe par zéro.

Dans une variante préférée, chaque première impulsion de freinage est prévue de sorte qu'elle se termine avant que la tension induite alternative atteigne, en valeur absolue, la valeur de la tension d'alimentation d'une capacité d'alimentation prévue pour l'alimentation du circuit de régulation, Par période de charge de la capacité d'alimentation, on comprend aussi bien une période de recharge directe de cette capacité d'alimentation qu'une période de recharge d'une capacité additionnelle incorporée au redresseur et qui stocke momentanément de l'énergie électrique produite par la génératrice, cette énergie électrique étant ensuite transférée à la capacité d'alimentation notamment dans une demi-période suivante de la tension induite.

Grâce aux caractéristiques de l'invention, la puissance de freinage de la génératrice peut être augmentée grâce à la génération des deuxièmes impulsions de freinage, sans perturber la recharge de la capacité d'alimentation par la génératrice et sans empêcher la détection du passage par zéro du signal de tension induite, permettant de compter un nombre de tours effectués par le rotor pour pouvoir déterminer la fréquence quasi instantanée de la génératrice et aussi sa fréquence moyenne au cours du temps de sorte à pouvoir assurer, via une régulation de la vitesse de la vitesse de rotation de la génératrice, une grande précision dans l'indication de l'heure courante lorsque le mouvement horloger fonctionne de manière continue. Dans un mode réalisation préféré, l'invention permet de générer deux premières impulsions de freinage et deux deuxièmes impulsions de freinage, pour freiner la génératrice, dans chaque période du signal de la tension induite dans le stator de cette génératrice par le rotor tournant.

### Brève description des figures

L'invention sera décrite ci-après de manière plus détaillée à l'aide des dessins annexés, donnés à titre d'exemples nullement limitatifs, dans lesquels :
- La Figure 1, déjà décrite, montre la tension induite dans au moins une bobine du stator d'une génératrice du type horloger et la tension aux bornes de ladite au moins une bobine lorsque la vitesse de rotation de la génératrice est régulée, avec une puissance de freinage maximale selon l'art antérieur, par des impulsions de freinage, via un court-circuit de ladite au moins une bobine, intervenant chacune à l'intérieur de la première moitié de chaque demi-période du signal de la tension induite ;
- La Figure 2 montre la tension induite aux bornes du stator d'une génératrice du type horloger et la tension entre ces bornes lorsque la vitesse de rotation de la génératrice est régulée selon l'invention avec une puissance de freinage augmentée au moyen d'impulsions de freinage, via un court-circuit d'au moins une bobine formant le stator, qui interviennent chacune à l'intérieur de la seconde moitié d'une demi-période du signal de la tension induite ;

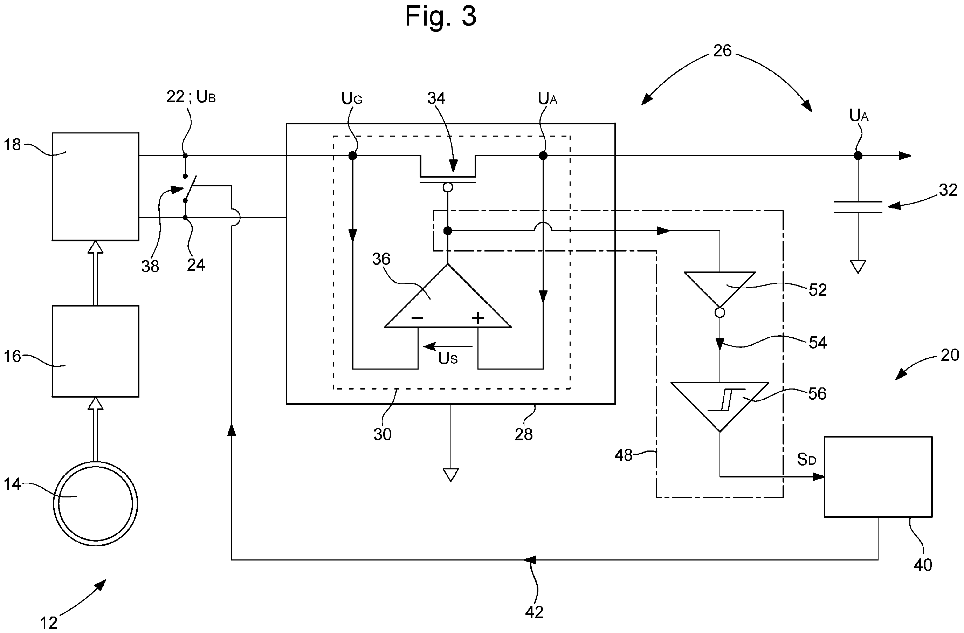

- La Figure 3 représente schématiquement et partiellement un premier mode de réalisation du mouvement horloger selon l'invention.

### Description détaillée de l'invention

On décrira, en référence aux Figures 2 et 3, un premier mode de réalisation d'un mouvement horloger 12 selon l'invention. De manière générale, le mouvement horloger 12 comprend un barillet 14, un mécanisme d'affichage analogique de l'heure 16 agencé pour pouvoir entraîner des indicateurs de l'heure courante (non représentés) et un module régulateur de la marche du mécanisme d'affichage analogique comprenant une génératrice à rotation continue 18 et un circuit de régulation 20. La génératrice est formée, de manière connue, d'un rotor à aimants permanents entrainé en rotation par le barillet et d'un stator comprenant au moins une bobine reliée au circuit de régulation, lequel est agencé pour pouvoir réguler la fréquence moyenne de rotation du rotor. Dans la variante représentée à la Figure 3, la génératrice comprend une ou plusieurs bobine(s) du type 'galette' (en forme de disque plat ayant un profil extérieur circulaire ou autre, par exemple trapézoïdal). Dans le cas d'une pluralité de bobines, celles-ci sont reliées en série ou en parallèle de sorte que le stator présente deux bornes 22 et 24.

Le mouvement horloger comprend un circuit d'alimentation 26 relié au stator et prévu pour alimenter le circuit de régulation. Ce circuit d'alimentation comprend un redresseur 'simple alternance' de la tension induite alternative générée par le rotor tournant dans la ou les bobine(s) du stator, ce redresseur étant formé par une diode active 30, et une capacité d'alimentation 32 qui est chargée par la tension induite via la diode active. On notera que le redresseur peut comprendre en outre un élévateur de tension. Le redresseur reçoit ainsi en entrée une tension U_{B} correspondant à la tension aux bornes du stator et il fournit en sortie à la diode active une tension redressée U_{G} correspondant à la tension induite redressée (en l'absence de court-circuit entre les bornes du stator). La diode active 30 est formée d'un transistor 34 et d'un comparateur 36 dont la sortie commande le transistor, cette diode active étant agencée par construction de manière à être conductrice lorsque la tension d'entrée U_{G} est supérieure à la tension de sortie U_{A} augmentée d'une tension de seuil Us prédéterminée (U_{G} > U_{A} + Us), et de manière que, lorsque la diode active est conductrice, la chute de tension au travers du transistor est supérieure à la tension de seuil. La tension U_{A} est la tension d'alimentation fournie par la capacité d'alimentation 32. La tension de seuil Us a par exemple une valeur comprise entre 10 et 20 mV. Cette tension de seuil est obtenue par une construction dissymétrique du comparateur 34 (technique connue).

Le circuit de régulation est agencé pour pouvoir mesurer la rotation du rotor au cours du temps et ainsi détecter une dérive de la fréquence de rotation moyenne de la génératrice relativement à une fréquence de consigne, déterminée par un oscillateur électronique associé au circuit de régulation, et/ou une variation de la fréquence de rotation, et pour pouvoir engendrer des impulsions de freinage du rotor en diminuant momentanément l'impédance aux bornes du stator, de sorte à freiner le rotor en fonction de la dérive mesurée et/ou de la variation détectée pour réguler la vitesse de rotation de la génératrice 18 et ainsi la marche du mécanisme d'affichage analogique 16. La mesure de la rotation du rotor peut avantageusement se faire, de manière connue, par une détection des passages par zéro du signal de tension induite 2 aux bornes du stator (voir Figure 2). Le circuit de mesure de la rotation du rotor et l'oscillateur du type électronique (en général un oscillateur à quartz) sont connus et n'ont pas été représentés à la Figure 3. Dans la variante représentée, les impulsions de freinage sont générées au moyen d'un interrupteur 38 qui est agencé entre les bornes 22, 24 du stator, cet interrupteur étant commandé par une unité de commande 40 qui ferme l'interrupteur durant des intervalles de temps distincts pour engendrer par court-circuit les impulsions de freinage. L'unité de commande 40 fait partie du circuit de régulation et elle fournit un signal digital de commande 42 à l'interrupteur 38 en fonction de divers paramètres de régulation propres au procédé de régulation prévu. Ainsi, notamment selon la dérive mesurée et/ou la variation détectée dans la rotation du rotor au cours du temps, le circuit de commande 40 génère plus ou moins d'impulsions de freinage.

L'objet de la présente invention, comme déjà exposé, est de permettre une augmentation de la puissance de freinage de la génératrice sans nuire à sa fonction d'alimentation du circuit de régulation et sans empêcher une détection des passages par zéro de la tension induite dans le stator de la génératrice, cette détection étant utile pour mesurer la rotation du rotor et aussi pour générer, de manière connue, des premières impulsions de freinage, correspondant à des premières impulsions de commande 44 qui les génèrent, qui sont déclenchées suite à la détection de passages par zéro du signal de tension induite.

Lorsque l'interrupteur est passant/conducteur, la tension U_{B} aux bornes du stator, représentée par la courbe 46 à la Figure 2, devient sensiblement nulle et la tension induite ne peut plus être mesurée. Pour cette raison, la durée T1 de chaque première impulsion de commande 44 est prévue de sorte que la première impulsion de freinage qui en résulte se termine avant que la tension induite atteigne une valeur de crête suite au passage par zéro ayant servi au déclenchement de cette première impulsion de freinage, à savoir à l'intérieur d'une première moitié d'une demi-période du signal de tension induite 2. De préférence, la durée T1 a une valeur maximale assurant que chaque première impulsion de freinage prenne fin avant que la tension induite atteigne une valeur égale à une tension d'alimentation U_{A} prévue pour l'alimentation du circuit de régulation (voir la Figure 2), pour permettre des périodes de charge optimales de la capacité d'alimentation, c'est-à-dire aussi longues que possible. La recharge de la capacité d'alimentation par la génératrice engendre dans le signal de tension U_{B} à la sortie du stator, respectivement dans le signal de tension U_{G} à la sortie du redresseur 28 des zones sensiblement planes correspondant aux périodes de charge de la capacité d'alimentation durant lesquelles la diode active est passante / conductrice. La tension induite et la tension induite redressée atteignent respectivement une valeur de crête et une valeur maximale au cours de chaque période de charge.

Selon l'invention, le circuit de régulation 20 est agencé de manière à pouvoir engendrer, en plus des premières impulsions de freinage, des deuxièmes impulsions de freinage, correspondant à des deuxièmes impulsions de commande 50 qui les génèrent, en diminuant momentanément l'impédance aux bornes du stator, ce qui est effectué en court-circuitant ces bornes par une fermeture de l'interrupteur 38 comme pour les premières impulsions de freinage. Les deuxièmes impulsions de freinage interviennent chacune après un passage de la tension induite par une valeur de crête, à savoir dans une seconde moitié d'une demi-période du signal de tension induite, et se terminent chacune avant le passage par zéro de la tension induite suivant cette valeur de crête. Plus précisément, il est prévu que chaque deuxième impulsion de freinage intervienne suite à la fin d'une période de charge de la capacité d'alimentation 32, de sorte à ne pas limiter cette période de charge et ainsi ne pas diminuer l'efficacité de recharge de la capacité d'alimentation par la génératrice. A cet effet, le circuit de régulation 20 comprend un circuit de détection 48 permettant de détecter les périodes de charge, au cours desquelles la diode active 30 est passante / conductrice et la capacité d'alimentation est ainsi rechargée, et plus particulièrement de détecter la fin de ces périodes de charge.

Le circuit de détection 48 fournit un signal digital de détection S_{D} indiquant l'état de la diode active 30 à l'unité de commande 40 qui gère l'impédance aux bornes du stator, cette unité de commande étant agencée pour pouvoir déclencher, par le flanc montant d'une deuxième impulsion de commande 50, une deuxième impulsion de freinage dès que le signal S_{D} présente une transition indiquant la fin d'une des périodes de charge. Ainsi, le flanc montant de chaque deuxième impulsion 50 du signal de commande 42, générant une deuxième impulsion de freinage, suit avantageusement quasi instantanément la détection de la fin d'une des périodes de charge au cours de laquelle la capacité d'alimentation est rechargée.

Le circuit de détection 48 comprend un amplificateur et inverseur 52 recevant en entrée le signal de sortie du comparateur 36 fourni au transistor 34 de la diode active 30. On remarquera que le transistor 34 est réalisé en technologie MOS de type P (PMOS). Ainsi, ce transistor est conducteur lorsque le signal de sortie du comparateur est à l'état 'bas'. Comme ce comparateur reçoit la tension redressée U_{G} de la génératrice sur sa borne négative et la tension d'alimentation U_{A} sur sa borne positive, son état est `bas' et le transistor est alors passant lorsque U_{G} > U_{A} + U_{S}. Ainsi, durant chaque période de charge où la génératrice recharge la capacité d'alimentation 32, le comparateur 36 fournit un signal `bas' et, lorsque cette période de charge se termine, le signal de sortie du comparateur passe d'un état `bas' à un état 'haut' et le signal analogique 54 à la sortie de l'amplificateur inverseur 52 passe de l'état 'haut' à l'état 'bas'. Le circuit de détection 48 comprend en outre un convertisseur analogique-numérique 56 (convertisseur A/N ; `AD converter') à hystérèse, notamment du type 'Schmitt trigger', agencé à la suite de l'amplificateur inverseur. Ce convertisseur A/N fournit le signal digital de détection S_{D} à l'unité de commande 40, permettant à cette dernière de recevoir l'information de fin de chaque période de charge de la capacité d'alimentation par la détection d'un changement de valeur dans le signal S_{D}.

Dans la variante représentée du circuit de détection, la fin d'une période de charge intervient lorsque la valeur du signal S_{D} passe de la valeur '1' à la valeur '0' (flanc descendant dans le signal So). Dans une variante où l'amplificateur n'est pas associé à un inverseur, c'est donc la transition entre la valeur '0' et la valeur '1' du signal S_{D} (flanc montant) qui indique l'instant auquel se termine une période de charge. Comme déjà indiqué, dès que l'instant de fin d'une période de charge est détecté par l'unité de commande et si le procédé de régulation requière à ce moment une deuxième impulsion de freinage, l'unité de commande engendre une deuxième impulsion de commande 50 dont le flanc montant (cas où les impulsions de commande sont données par la valeur '1' du signal de commande 42) est quasi simultané avec l'instant de fin d'une période de charge détecté. La durée T2 de chaque deuxième impulsion de commande 50 est prévue de sorte que la deuxième impulsion de freinage qui en résulte se termine avant que la tension induite atteigne la valeur zéro, de sorte que cette deuxième impulsion de freinage soit à l'intérieur d'une deuxième moitié d'une demi-période du signal de tension induite 2 (voir la Figure 2). A noter que la Figure 2 montre seulement une période de la tension induite 2 dans le stator et de la tension U_{B} aux bornes du stator de la génératrice 18, ainsi que trois impulsions de commande engendrant trois impulsions de freinage au cours de cette période, à savoir deux premières impulsions de freinage et une deuxième impulsion de freinage qui intervient dans la demi-période positive de la tension induite comme le permet le premier mode réalisation décrit ci-avant avec un redresseur 'simple alternance'.

On remarquera que dans le cadre du premier mode de réalisation, dans la mesure où le signe de la tension induite après chaque passage par zéro de la tension induite est connu, il est possible d'augmenter la durée des impulsions de freinage intervenant dans les demi-périodes négatives de la tension induite et ainsi d'augmenter considérablement la puissance de freinage par des troisièmes impulsions de freinage qui commencent chacune avant un instant du passage de la tension induite par une valeur extrême négative et terminent après cet instant. La durée des troisièmes impulsions de freinage est notamment supérieure au quart d'une période de la tension induite. Cependant, selon la technologie utilisée et le circuit électronique prévu, la recharge de la capacité d'alimentation par la génératrice nécessite que cette capacité d'alimentation soit rechargée dans chaque demi-période de la tension induite. Pour ce faire, il est prévu un deuxième mode de réalisation préféré de l'invention (non représenté) dans lequel est agencé un redresseur `double alternance' formé, de manière connue, avec deux diodes actives, avantageusement une diode active PMOS (diode PMOS) qui devient conductrice au cours des demi-périodes positives et une diode active NMOS (diode NMOS) qui devient conductrice au cours des demi-périodes négatives de la tension induite. La diode PMOS (aussi utilisée dans le premier mode de réalisation) est agencée également entre la borne 22 de la génératrice et la borne positive V_{DD} de la capacité d'alimentation délivrant la tension U_{A}. Cette diode PMOS est associée à un circuit de détection 48 semblable à celui représenté à la Figure 3. La diode NMOS est agencée entre la borne 22 de la génératrice et la borne négative Vss de la capacité d'alimentation. Cette diode NMOS est agencée dans le redresseur de sorte à devenir passante lorsque U_{G} est inférieur à moins Us (soit U_{G} < - U_{S}). De plus, une capacité additionnelle (dont la valeur est en général légèrement inférieure à la moitié de la capacité d'alimentation) est agencée entre la borne 24 de la génératrice et la borne V_{DD} de la capacité d'alimentation 32. Cette capacité additionnelle est chargée lors des demi-périodes positives lorsque la diode PMOS est conductrice et déchargée lors des demi-périodes négatives lorsque la diode NMOS est conductrice, le transfert d'énergie à la capacité d'alimentation intervenant une seule fois par période de la tension induite, mais avec une énergie transférée environ égale au double de celle transférée dans le premier mode de réalisation. Un second circuit de détection, similaire au premier associé à la diode active PMOS, est prévu. Ce second circuit de détection est agencé pour fournir un signal de détection à l'unité de commande lui permettant de détecter dans les demi-périodes négatives de la tension induite lorsque la période de charge de la capacité d'alimentation prend fin, c'est-à-dire lorsque la diode active NMOS passe d'un état conducteur à un état non-conducteur, pour ainsi permettre d'engendrer dans ces demi-périodes négatives également des deuxièmes impulsions de freinage selon l'invention.

On remarquera que la présente invention permet de réguler la vitesse de rotation de la génératrice 18 sur une plage étendue d'un couple de force appliqué au rotor de cette génératrice, cette plage allant sensiblement d'un couple utile pour le fonctionnement normal du mouvement horloger à un couple maximal permettant encore la régulation de la marche du mécanisme d'affichage 16 par le module de régulation selon l'invention. Lorsque le couple de force est minimal, c'est-à-dire qu'aucune impulsion de freinage n'est théoriquement nécessaire pour maintenir la rotation de la génératrice à une vitesse de consigne en situation stable, il n'y a alors de fait plus de régulation de sorte que pratiquement le couple utile à un bon fonctionnement du mouvement horloger est légèrement supérieur à un tel couple minimal. Dans le deuxième mode de réalisation, lorsque le couple de force est maximal, la régulation de la vitesse angulaire du rotor de la génératrice impose de générer une première impulsion de freinage et une deuxième impulsion de freinage dans chaque demi-période de la tension induite, ces première et deuxième impulsions de freinage présentant chacune une durée maximale respective. Entre ces deux valeurs extrêmes du couple de force, il y a plusieurs options possibles pour la régulation de la fréquence moyenne de la génératrice. On peut notamment commencer par diminuer la durée des premières impulsions de freinage et/ou des deuxièmes impulsions de freinage. On peut aussi commencer par éliminer / inhiber périodiquement une première impulsion de freinage et/ou une deuxième impulsion de freinage. Dans une variante particulière où on commence par réduire progressivement le nombre de deuxièmes impulsions de freinage par unité de temps lorsque le couple de force diminue depuis sa valeur maximale, on arrive à un certain moment à un couple de force intermédiaire pour lequel, en fonctionnement stable de la génératrice, seules des premières impulsions de freinage sont nécessaires. Lorsque le couple de force continue de diminuer, la durée et/ou la fréquence des premières impulsions de freinage diminue(nt) à leur tour. On comprend donc que plusieurs variantes du procédé de régulation sont envisageables dans le cadre de l'invention.

Le point central de l'invention concerne l'agencement du module de régulation de sorte qu'une première impulsion de freinage et une deuxième impulsion de freinage puissent être générées, si nécessaires, dans chaque demi-période positive (premier mode de réalisation) ou dans chaque demi-période (deuxième mode de réalisation) de la tension induite entre les bornes du stator de la génératrice, sans perturber la fonction de source d'énergie électrique de la génératrice pour recharger un circuit d'alimentation du circuit de régulation et sans empêcher la détection des passages par zéro successifs du signal de la tension induite, détection utile pour mesurer la vitesse angulaire du rotor et donc sa fréquence (nombre de tours par seconde) et également pour déclencher, éventuellement avec un petit déphasage temporel, les premières impulsions de freinage.

## Revendications

1. Mouvement horloger (12) comprenant un barillet (14), un mécanisme d'affichage analogique de l'heure (16) et un module régulateur de la marche du mécanisme d'affichage analogique comprenant une génératrice à rotation continue (18) et un circuit de régulation (20), la génératrice étant formée d'un rotor à aimants permanents entrainé en rotation par le barillet et comprenant au moins une bobine, formant un stator, qui est reliée au circuit de régulation, lequel est agencé pour pouvoir réguler la fréquence moyenne de rotation du rotor ; le mouvement horloger comprenant un circuit d'alimentation (26) relié à ladite au moins une bobine et prévu pour alimenter le circuit de régulation, ce circuit d'alimentation comprenant un redresseur (28) pour redresser la tension induite alternative et une capacité d'alimentation (32) qui est rechargée, par la tension induite via le redresseur, durant des périodes de charge au cours de chacune desquelles ladite tension induite atteint une valeur de crête ; le circuit de régulation étant agencé pour pouvoir mesurer la rotation du rotor au cours du temps et ainsi détecter une dérive de la fréquence de rotation moyenne de la génératrice relativement à une fréquence de consigne, déterminée par un oscillateur électronique associé au circuit de régulation, et/ou une variation de la fréquence de rotation, et pour pouvoir engendrer des impulsions de freinage du rotor en diminuant momentanément l'impédance aux bornes de ladite au moins une bobine, de sorte à freiner le rotor en fonction de ladite dérive et/ou de ladite variation pour réguler la vitesse de rotation de la génératrice et ainsi la marche du mécanisme d'affichage analogique ; le circuit de régulation étant agencé pour pouvoir détecter les passages par zéro d'une tension induite alternative générée dans ladite au moins une bobine par le rotor tournant et engendrer des premières impulsions de freinage (44) qui sont chacune déclenchées suite à une détection d'un passage par zéro de la tension induite, la durée (T1) de chaque première impulsion de freinage étant prévue de sorte qu'elle se termine avant que la tension induite alternative atteigne la valeur de crête suivant le passage par zéro ayant servi au déclenchement de cette première impulsion de freinage ; **caractérisé en ce que** le circuit de régulation est agencé de manière à pouvoir engendrer en outre des deuxièmes impulsions de freinage (50) qui sont chacune déclenchées suite à une détection de la fin d'une des périodes de charge de la capacité d'alimentation et qui ont chacune une durée (T2) prévue pour que chaque deuxième impulsion de freinage se termine avant que la tension induite alternative passe par zéro.

2. Mouvement horloger selon la revendication 1, **caractérisé en ce que** chaque première impulsion de freinage est prévue de sorte qu'elle se termine avant que la tension induite alternative devienne égale, en valeur absolue, à une tension d'alimentation (U_{A}) de la capacité d'alimentation (32).

3. Mouvement horloger selon la revendication 1 ou 2, **caractérisé en ce que** le redresseur (28) comprend au moins une diode active (30) qui est formée d'un transistor (34) et d'un comparateur (36) dont la sortie commande le transistor, cette diode active étant agencée par construction de manière à être conductrice lorsque la tension d'entrée (U_{G}) est supérieure à la tension de sortie (U_{A}) augmentée d'une tension de seuil prédéterminée (Us), et de manière que, lorsque ladite diode active est conductrice, la chute de tension au travers du transistor est supérieure à la tension de seuil.

4. Mouvement horloger selon la revendication 3, **caractérisé en ce que** le circuit de régulation comprend un circuit (48) de détection de périodes de charge au cours desquelles ladite diode active est conductrice et la génératrice recharge la capacité d'alimentation, ce circuit de détection fournissant un signal digital de détection (S_{D}) de l'état de ladite diode active à une unité de commande (40) qui gère l'impédance aux bornes du stator, cette unité de commande étant agencée pour pouvoir déclencher une deuxième impulsion de freinage (50) dès que le signal digital de détection présente une transition indiquant la fin d'une desdites périodes de charge.

5. Mouvement horloger selon la revendication 4, **caractérisé en ce que** le circuit de régulation comprend un interrupteur (38) entre les bornes de ladite au moins une bobine, cet interrupteur étant commandé par l'unité de commande (40) qui ferme l'interrupteur durant des intervalles de temps distincts (T1, T2) pour engendrer par court-circuit les impulsions de freinage.

## Patentansprüche

1. Uhrwerk (12), das ein Federhaus (14), einen analogen Zeitanzeigemechanismus (16) und ein Modul zur Regulierung des Gangs des analogen Anzeigemechanismus umfasst, das einen kontinuierlich drehenden Generator (18) und eine Regelschaltung (20) umfasst, wobei der Generator von einem Permanentmagnetrotor gebildet wird, der vom Federhaus drehangetrieben wird, und mindestens eine Spule umfasst, die einen Stator bildet, der mit der Regelschaltung verbunden ist, der so eingerichtet ist, dass er die durchschnittliche Drehfrequenz des Rotors regeln kann; wobei das Uhrwerk eine Speiseschaltung (26) umfasst, die mit der mindestens einen Spule verbunden und zum Speisen der Regelschaltung vorgesehen ist, wobei diese Speiseschaltung einen Gleichrichter (28) zum Gleichrichten der induzierten Wechselspannung und eine Speisekapazität (32) umfasst, die durch die über den Gleichrichter induzierte Spannung während Ladeperioden, in denen die induzierte Spannung jeweils einen Spitzenwert erreicht, aufgeladen wird; wobei die Regelschaltung so eingerichtet ist, dass sie die Drehung des Rotors im zeitlichen Verlauf messen und damit eine Abweichung der durchschnittlichen Drehfrequenz des Generators relativ zu einer Sollfrequenz, die von einem mit der Regelschaltung verknüpften elektronischen Oszillator bestimmt wird, und/oder eine Änderung der Drehfrequenz erkennen kann, und durch momentanes Verringern der Impedanz an den Klemmen der mindestens einen Spule Bremsimpulse für den Rotor erzeugen kann um zum Regeln der Drehgeschwindigkeit des Generators und damit des Gangs des analogen Anzeigemechanismus den Rotor in Abhängigkeit von der Abweichung und/oder der Änderung zu bremsen; wobei die Regelschaltung so eingerichtet ist, dass sie die Nulldurchgänge einer induzierten Wechselspannung, die durch den sich drehenden Rotor in der mindestens einen Spule erzeugt wird, erkennen und erste Bremsimpulse (44) erzeugen kann, die jeweils infolge eines Erkennens eines Nulldurchgangs der induzierten Spannung ausgelöst werden, wobei die Dauer (T1) jedes ersten Bremsimpulses so vorgesehen ist, dass er endet, bevor die induzierte Wechselspannung nach dem Nulldurchgang, der zum Auslösen dieses ersten Bremsimpulses gedient hat, den Spitzenwert erreicht; **dadurch gekennzeichnet, dass** die Regelschaltung so eingerichtet ist, dass sie weiter zweite Bremsimpulse (50) erzeugen kann, die jeweils infolge eines Erkennens des Endes einer der Ladeperioden der Speisekapazität ausgelöst werden und die jeweils eine Dauer (T2) aufweisen, die so vorgesehen ist, dass jeder zweite Bremsimpuls endet, bevor die induzierte Wechselspannung durch Null geht.

2. Uhrwerk nach Anspruch 1, **dadurch gekennzeichnet, dass** jeder erste Bremsimpuls so vorgesehen ist, dass er endet, bevor die induzierte Wechselspannung im Absolutwert gleich einer Speisespannung (U_{A}) der Speisekapazität (32) wird.

3. Uhrwerk nach Anspruch 1 oder 2, **dadurch gekennzeichnet, dass** der Gleichrichter (28) mindestens eine aktive Diode (30) umfasst, die von einem Transistor (34) und einem Komparator (36) gebildet wird, dessen Ausgang den Transistor steuert, wobei diese aktive Diode konstruktionsmäßig so eingerichtet ist, dass sie leitend ist, wenn die Eingangsspannung (U_{G}) größer ist als die Ausgangsspannung (U_{A}) plus einer vorbestimmten Schwellenspannung (U_{S}) , und so, dass, wenn die aktive Diode leitend ist, der Spannungsabfall durch den Transistor größer ist als die Schwellenspannung.

4. Uhrwerk nach Anspruch 3, **dadurch gekennzeichnet, dass** die Regelschaltung eine Schaltung (48) zum Erkennen von Ladeperioden umfasst, in denen die aktive Diode leitend ist und der Generator die Speisekapazität auflädt, wobei diese Erkennungsschaltung ein digitales Erkennungssignal (SD) des Zustands der aktiven Diode an eine Steuereinheit (40) liefert, die die Impedanz an den Klemmen des Stators verwaltet, wobei diese Steuereinheit so eingerichtet ist, dass sie einen zweiten Bremsimpuls (50) auslösen kann, sobald das digitale Erkennungssignal einen Übergang aufweist, der das Ende einer der Ladeperioden anzeigt.

5. Uhrwerk nach Anspruch 4, **dadurch gekennzeichnet, dass** die Regelschaltung einen Schalter (38) zwischen den Klemmen der mindestens einen Spule umfasst, wobei dieser Schalter von der Steuereinheit (40) gesteuert wird, die den Schalter während verschiedener Zeitintervalle (T1, T2) schließt, um durch Kurzschluss die Bremsimpulse zu erzeugen.

## Claims

1. A horological movement (12) comprising a barrel (14), an analogue time display mechanism (16) and a regulator module for regulating the running of the analogue display mechanism comprising a continuously rotating generator (18) and a regulation circuit (20), the generator being formed of a rotor with permanent magnets rotated by the barrel and comprising at least one coil, forming a stator, which is connected to the regulation circuit, which is arranged to be able to regulate the average frequency of rotation of the rotor; the horological movement comprising a power supply circuit (26) connected to said at least one coil and intended to power supply the regulation circuit, this power supply circuit comprising a rectifier (28) for rectifying the induced alternating voltage and a power supply capacity (32) which is recharged, by the voltage induced via the rectifier, during charging periods in each of which said induced voltage reaches a peak value; the regulation circuit being arranged to be able to measure the rotation of the rotor over time and thus detect a drift in the average frequency of rotation of the generator relative to a set frequency, determined by an electronic oscillator associated with the regulation circuit, and/or a variation in the frequency of rotation, and to be able to generate braking pulses of the rotor by momentarily reducing the impedance at the terminals of said at least one coil, so as to brake the rotor according to said drift and/or said variation to regulate the speed of rotation of the generator and thus the operation of the analogue display mechanism; the regulation circuit being arranged to be able to detect the zero crossings of an induced alternating voltage generated in said at least one coil by the rotating rotor and to generate first braking pulses (44) which are each triggered after a detection of a zero crossing of the induced voltage, the duration (T1) of each first braking pulse being scheduled so that it ends before the induced alternating voltage reaches the peak value after the zero crossing used to trigger this first braking pulse; **characterised in that** the regulation circuit is arranged so as to be able to further generate second braking pulses (50) which are each triggered after a detection of the end of one of the charging periods of the power supply capacity and each of which has a duration (T2) scheduled for each second braking pulse to end before the induced alternating voltage crosses zero.

2. The horological movement according to claim 1, **characterised in that** each first braking pulse is provided so that it ends before the induced alternating voltage becomes equal, in absolute value, to a power supply voltage (U_{A}) of the power supply capacity (32).

3. The horological movement according to claim 1 or 2, **characterised in that** the rectifier (28) comprises at least one active diode (30) which is formed of a transistor (34) and a comparator (36) the output of which controls the transistor, this active diode being arranged by construction so as to be conductive when the input voltage (U_{G}) is greater than the output voltage (U_{A}) increased by a predetermined threshold voltage (Us), and so that when said active diode is conductive, the voltage drop across the transistor is greater than the threshold voltage.

4. The horological movement according to claim 3, **characterised in that** the regulation circuit comprises a circuit (48) for detecting charging periods during which said active diode is conductive and the generator recharges the power supply capacity, this detection circuit providing a digital detection signal (S_{D}) on the state of said active diode to a control unit (40) which manages the impedance at the terminals of the stator, this control unit being arranged to be able to trigger a second braking pulse (50) as soon as the digital detection signal has a transition indicating the end of one of said charging periods.

5. The horological movement according to claim 4, **characterised in that** the regulation circuit comprises a switch (38) between the terminals of said at least one coil, this switch being controlled by the control unit (40) which closes the switch during distinct time intervals (T1, T2) in order to generate the braking pulses by short-circuiting.
